# FASCICULE DE BREVET EUROPEEN

(11) **EP 2 445 614 B1**
(45) Date de publication et mention de la délivrance du brevet: **29.01.2014**
(21) Numéro de dépôt: 10732450.1
(22) Date de dépôt: 25.06.2010
(51) Int. Cl.: B01D 53/14, B01D 53/52, B01D 53/62

(54) **PROCEDE DE TRAITEMENT DE GAZ ACIDES**
VERFAHREN ZUR BEHANDLUNG VON SAUERGASEN
PROCESS FOR THE TREATMENT OF ACID GASES

(30) Priorité: 26.06.2009 FR 0903117
(43) Date de publication de la demande: 02.05.2012
(73) Titulaire: Total S.A., 92400 Courbevoie (FR)
(72) Inventeur: WEISS, Claire, 92420 Vaucresson (FR); CADOURS, Renaud, 69340 Francheville (FR); BOUZALMATA, Kamal, F-60180 Nogent Sur Oise (FR)
(74) Mandataire: Hirsch & Associés
(86) Numéro de dépôt international: PCT/IB2010/052905
(87) Numéro de publication internationale: WO 2010/150227

(56) Documents cités:
- FR-A1- 2 429 981
- GB-A- 1 222 199
- US-A- 4 299 801
- US-A- 4 345 918

## Description

### DOMAINE DE L'INVENTION

La présente invention concerne un procédé de purification d'un mélange gazeux (en particulier un mélange gazeux à base d'hydrocarbures tel que du gaz naturel) contenant des gaz acides, ainsi qu'une installation adaptée à la mise en oeuvre de ce procédé.

### ARRIERE-PLAN TECHNIQUE

Dans le cadre de la production de gaz naturel (contenant principalement du méthane) ou de gaz naturel liquéfié, il est nécessaire de purifier ledit gaz naturel issu d'un gisement d'un certain nombre de contaminants, au premier rang desquels ce que l'on appelle les « gaz acides », c'est-à-dire principalement le dioxyde de carbone (CO₂) et le sulfure d'hydrogène (H₂S), avec éventuellement des mercaptans, du sulfure de carbonyle et / ou du disulfure de carbone, généralement en quantités plus faibles.

A eux seuls, le dioxyde de carbone et le sulfure d'hydrogène peuvent représenter une part importante du mélange gazeux issu d'un gisement de gaz naturel, typiquement de 3 à 70 % (en concentration molaire).

De nombreux procédés existent actuellement pour désacidifier le gaz naturel.

Une première classe de procédés est celle des procédés d'absorption physique, dans lesquels les gaz acides sont mis en contact avec une solution absorbante, le transfert des gaz acides dans la solution absorbante étant effectué par affinité. Des exemples de composés pouvant former de telles solutions absorbantes appropriées sont le diméthyléther de polyéthylène glycol (procédé « Selexol » de UOP), le propylène carbonate (procédé de Fluor Corporation), la N-méthyl-pyrrolidone (procédés « Purisol » de Lurgi), le méthanol (procédé « Rectisol » de Lurgi) ou des dérivés de morpholine (procédé « Morphisorb » de UHDE). La régénération de la solution absorbante s'effectue par détentes successives à des pressions décroissantes, sans fourniture d'énergie.

Une deuxième classe de procédés est celle des procédés d'absorption chimique dans lesquels les gaz acides sont mis en contact avec une solution absorbante, le transfert des gaz acides dans la solution absorbante étant effectué ou accéléré par une réaction chimique. Des exemples de composés pouvant former de telles solutions absorbantes appropriées sont le carbonate de potassium (procédé « Benfield » de UOP) et surtout les alcanolamines : notamment la monoéthanolamine (MEA), le 2-aminoéthoxyéthanol également connu sous le nom de diglycolamine (DGA), la diisopropanolamine (DIPA), la diéthanolamine (DEA), la méthyldiéthanolamine (MDEA), la méthyldiéthanolamine activée et la triéthanolamine (TEA), ainsi que les amines stériquement encombrées. La régénération de la solution absorbante s'effectue principalement dans une colonne de régénération thermique.

On peut également mentionner une classe de procédés mixtes, d'absorption physico-chimique, comme par exemple le procédé dit « Sulfinol » de Shell, dans lequel la solution absorbante est un mélange de sulfolane, d'eau et d'une amine. On peut également faire référence au procédé d'absorption physico-chimique au moyen d'un mélange d'alcanolamine, d'eau et de thioalcanol qui est décrit dans le document WO 2007/083012.

Classiquement, les gaz acides libérés lors de la régénération de la solution absorbante alimentent une unité Claus, où l'H₂S est converti en soufre mais où le CO₂ associé peut être considéré comme un contaminant, qui entraîne un surcoût important du traitement de l'H₂S. Par ailleurs, les contraintes environnementales croissantes ont tendance à imposer de plus en plus de ne pas relâcher le CO₂ produit à l'atmosphère. Par exemple, il est souhaitable de pouvoir utiliser le CO₂ produit pour l'amélioration de la récupération d'huiles hydrocarbures (« Enhanced Oil Recovery » ou EOR), c'est-à-dire la réinjection sous pression en puits.

Il est donc souhaitable de disposer des gaz acides produits sous la forme de deux fractions relativement pures, l'une contenant l'H₂S et l'autre le CO₂.

Pour opérer une séparation entre l'H₂S et le CO₂, il est connu d'utiliser une colonne de distillation. Le document US 4,293,322 propose un exemple de distillation H₂S / CO₂ au moyen d'un tiers corps. Toutefois, si l'on souhaite atteindre un degré de pureté élevé pour chacun des deux gaz, il est nécessaire d'utiliser un équipement de grand volume, coûteux et présentant une grande consommation énergétique.

Une méthode alternative de séparation des gaz acides est proposée dans le document WO 2008/107550. Dans ce document, la régénération de la solution absorbante est effectuée en plusieurs étages à pression décroissante, les gaz étant recomprimés et réinjectés des étages inférieurs vers les étages supérieurs. Le détournement d'une partie des gaz à l'étage à la pression la plus basse fournit un flux riche en H₂S, tandis qu'on récupère en sortie de l'étage à la pression la plus élevée un flux riche en CO₂. Toutefois, cette méthode est efficace surtout lorsque le rapport de la concentration molaire en CO₂ sur la concentration molaire en H₂S est élevé. En revanche, lorsque ce rapport est faible, la sélectivité de la séparation diminue fortement, c'est-à-dire que le flux CO₂ contient une proportion importante d'H₂S (de l'ordre de 20 % lorsque le rapport de concentrations CO₂ / H₂S est inférieur à 1).

FR2429981 A1 décrit un procédé de traitement d'un mélange gazeux contenant du dioxyde de carbone et du sulfure d'hydrogène, comprenant l'étape de désacidification du mélange gazeux avec une solution absorbante et régénération de la solution absorbante riche. Un flux de gaz acides est distillé, fournissant un premier flux riche en dioxyde de carbone et un flux comprenant du sulfure d'hydrogène.

Il existe donc un besoin d'un procédé de purification de mélange gazeux contenant des gaz acides qui permette de produire un flux CO₂ et un flux H₂S séparément, avec un degré de pureté élevé, ledit procédé étant plus simple à mettre en oeuvre et / ou moins consommateur d'énergie et / ou moins coûteux que les procédés éxistants.

Il existe en particulier un besoin d'un tel procédé lorsque le rapport de la concentration molaire en CO₂ sur la concentration molaire en H₂S dans le mélange gazeux à traiter est faible, et notamment est inférieur ou égal à 1.

### RESUME DE L'INVENTION

L'invention concerne en premier lieu un procédé de traitement d'un mélange gazeux contenant du dioxyde de carbone et du sulfure d'hydrogène, comprenant les étapes suivantes :
- désacidification du mélange gazeux par mise en contact dudit mélange gazeux avec un premier flux de solution absorbante pauvre, fournissant un mélange gazeux désacidifié et un premier flux de solution absorbante riche ;
- régénération du premier flux de solution absorbante riche, fournissant le premier flux de solution absorbante pauvre et un flux de gaz acides ;
- distillation du flux de gaz acides, fournissant un premier flux riche en dioxyde de carbone et un flux riche en sulfure d'hydrogène présentant une pureté supérieure à 99%;
- purification du premier flux riche en dioxyde de carbone par mise en contact dudit premier flux riche en dioxyde de carbone avec un deuxième flux de solution absorbante pauvre, fournissant un deuxième flux riche en dioxyde de carbone et un deuxième flux de solution absorbante riche, la concentration molaire de dioxyde de carbone dans le deuxième flux riche en dioxyde de carbone étant supérieure à la concentration molaire de dioxyde de carbone dans le premier flux riche en dioxyde de carbone.

Selon un mode de réalisation, le premier flux de solution absorbante pauvre et le deuxième flux de solution absorbante pauvre ont la même composition.

Selon un mode de réalisation :
- l'étape de régénération comprend également la régénération du deuxième flux de solution absorbante riche, ladite étape de régénération fournissant le premier flux de solution absorbante pauvre et le deuxième flux de solution absorbante pauvre ; ou
- l'étape de désacidification comprend également la mise en contact du mélange gazeux avec le deuxième flux de solution absorbante riche, fournissant le mélange gazeux désacidifié et le premier flux de solution absorbante riche.

Selon un mode de réalisation, le mélange gazeux contenant du dioxyde de carbone et du sulfure d'hydrogène est à base d'hydrocarbures, et de préférence est du gaz naturel.

Selon un mode de réalisation, le rapport de concentration molaire entre le dioxyde de carbone et le sulfure d'hydrogène dans le mélange gazeux comprenant du dioxyde de carbone et du sulfure d'hydrogène est inférieur ou égal à 1, de préférence inférieur ou égal à 0,75 et idéalement inférieur ou égal à 0,5.

La concentration molaire de dioxyde de carbone dans le premier flux riche en dioxyde de carbone est comprise entre 80 et 99 %, de préférence entre 85 et 98 %, de manière plus particulièrement préférée entre 90 et 97 %, et idéalement entre 93 et 96 %.

Selon un mode de réalisation :
- la concentration de dioxyde de carbone dans le flux riche en sulfure d'hydrogène est inférieure ou égale à 5000 ppmv, de préférence inférieure ou égale à 2000 ppmv, de manière plus particulièrement préférée inférieure ou égale à 200 ppmv ; et / ou
- la concentration de sulfure d'hydrogène dans le deuxième flux riche en dioxyde de carbone est inférieure ou égale à 5000 ppmv, de préférence inférieure ou égale à 1000 ppmv, de manière plus particulièrement préférée inférieure ou égale à 200 ppmv.

Selon un mode de réalisation, le procédé susmentionné comprend en outre l'étape de :
- déshydratation du mélange gazeux désacidifié.

Selon un mode de réalisation, le procédé susmentionné ne comprend pas d'étape de déshydratation du flux de gaz acides au moyen de tamis moléculaire ou d'une mise en contact avec un solvant, préalablement à l'étape de distillation.

L'invention concerne également une installation de traitement d'un mélange gazeux contenant des gaz acides, comprenant :
- une conduite d'amenée de mélange gazeux ;
- une première conduite d'amenée de solution absorbante pauvre ;
- une colonne d'absorption, alimentée par la conduite d'amenée de mélange gazeux et par la première conduite d'amenée de solution absorbante pauvre ;
- une conduite de soutirage de mélange gazeux désacidifié issue de la colonne d'absorption ;
- une première conduite de soutirage de solution absorbante riche issue de la colonne d'absorption ;
- un régénérateur, alimenté par la première conduite de soutirage de solution absorbante riche ;
- une conduite de soutirage de solution absorbante pauvre issue du régénérateur ;
- une conduite de soutirage de gaz acides issue du régénérateur ;
- une unité de distillation, alimentée par la conduite de soutirage de gaz acides ;
- une conduite de soutirage de flux riche en sulfure d'hydrogène issue de l'unité de distillation ;
- une première conduite de soutirage de flux riche en dioxyde de carbone issue de l'unité de distillation ;
- une deuxième conduite d'amenée de solution absorbante pauvre ;
- un contacteur alimenté par la première conduite de soutirage de flux riche en dioxyde de carbone et par la deuxième conduite d'amenée de solution absorbante pauvre ;
- une deuxième conduite de soutirage de flux riche en dioxyde de carbone issue du contacteur ; et
- une deuxième conduite de soutirage de solution absorbante riche issue du contacteur.

Selon un mode de réalisation, la première conduite d'amenée de solution absorbante pauvre et la deuxième conduite d'amenée de solution absorbante pauvre sont issues d'un même réservoir de solution absorbante pauvre.

Selon un mode de réalisation :
- la deuxième conduite de soutirage de solution absorbante riche alimente le régénérateur ; ou
- la deuxième conduite de soutirage de solution absorbante riche alimente la colonne d'absorption.

Selon un mode de réalisation, le contacteur est une colonne d'absorption ou, de préférence, un mélangeur à injection ou un mélangeur statique.

Selon un mode de réalisation, l'installation susmentionnée est dépourvue d'unité de déshydratation par solvant ou par tamis moléculaire entre le régénérateur et l'unité de distillation.

Selon un mode de réalisation, le procédé susmentionné est mis en oeuvre dans l'installation susmentionnée.

L'invention concerne également un procédé de production de gaz naturel liquéfié, comprenant :
- le traitement d'un gaz naturel contenant des gaz acides, selon le procédé susmentionné ; et
- la liquéfaction du gaz naturel traité.

La présente invention permet de surmonter les inconvénients de l'état de la technique. Elle fournit plus particulièrement un procédé de purification de mélange gazeux contenant des gaz acides permettant de produire un flux CO₂ et un flux H₂S séparément, avec un degré de pureté élevé, ledit procédé étant plus simple à mettre en oeuvre et / ou moins consommateur d'énergie et / ou moins que coûteux que les procédés existants.

Ceci est accompli grâce à une séparation des gaz acides en deux étapes, avec une distillation dans une première étape et un lavage du flux CO₂ avec une solution absorbante dans une deuxième étape. De la sorte, la distillation de la première étape n'a pas besoin d'être poussée à son maximum, puisqu'un traitement de finition est prévu dans la deuxième étape. Le procédé selon l'invention est donc moins consommateur d'énergie, moins coûteux, et il nécessite un équipement moins lourd.

Il est particulièrement avantageux de mettre en oeuvre ce procédé lorsque le rapport de la concentration molaire en CO₂ sur la concentration molaire en H₂S dans le mélange gazeux à traiter est faible, et notamment est inférieur ou égal à 1, car dans ce cas la séparation sélective par régénération étagée ne permet pas de produire un flux CO₂ suffisamment pur.

Selon certains modes de réalisation particuliers, l'invention présente également une ou de préférence plusieurs des caractéristiques avantageuses énumérées ci-dessous.
- Le lavage du flux CO₂ peut être effectué avec la même solution absorbante que pour le mélange gazeux principal, en utilisant le même circuit de régénération, ce qui limite le nombre et le volume des équipements supplémentaires à prévoir.
- Du fait que la distillation H₂S / CO₂ n'est pas poussée à son maximum, l'unité de distillation est relativement tolérante à la présence d'eau. Par conséquent, et contrairement à l'état de la technique, il peut être inutile de prévoir une étape spécifique de déshydratation des gaz acides entre la régénération de la solution absorbante et la distillation. Ceci représente une simplification considérable, dans la mesure où la déshydratation des gaz acides nécessite des équipements lourds et complexes (typiquement des tamis moléculaires, qui sont difficiles à régénérer lorsque le flux gazeux traité est un mélange d'H₂S et de CO₂).

### BREVE DESCRIPTION DES FIGURES

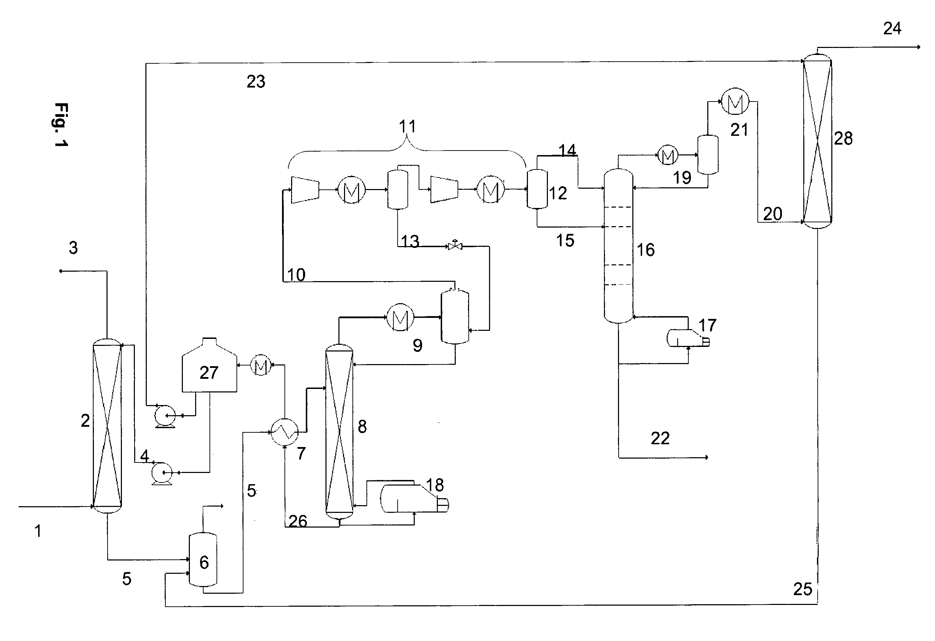

La **figure 1** représente de manière schématique un mode de réalisation de l'installation de traitement de mélange gazeux selon l'invention.

### DESCRIPTION DE MODES DE REALISATION DE L'INVENTION

L'invention est maintenant décrite plus en détail et de façon non limitative dans la description qui suit.

### Installation de traitement de gaz

Dans ce qui suit, les termes « amont » et « aval » sont définis par rapport au sens de transport des différents fluides dans l'installation.

En faisant référence à la **figure 1**, une installation de traitement de gaz selon l'invention comprend au moins une colonne d'absorption 2, et au moins un régénérateur 8.

La colonne d'absorption 2 peut être une colonne usuelle dans le domaine, notamment une colonne à plateaux ou une colonne à garnissage. L'installation peut également comprendre deux colonnes d'absorption ou plus.

Le régénérateur 8 est un contacteur. Il peut consister en un simple récipient doté de moyens de pulvérisation de solution absorbante ou, de manière préférée, en une colonne à plateaux (ou une colonne à garnissage). A titre d'exemple le régénérateur 8 peut comporter de 10 à 30 plateaux réels.

La colonne d'absorption 2 est alimentée en pied par une conduite d'amenée de mélange gazeux 1. Une conduite de soutirage de mélange gazeux désacidifié 3 est connectée en sortie en tête de la colonne d'absorption 2. Elle peut alimenter des moyens de traitement complémentaire (notamment des moyens de déshydratation) ou de stockage ou de transport du gaz, qui ne sont pas représentés ici.

En tête de la colonne d'absorption 2 est branchée, en entrée, une première conduite d'amenée de solution absorbante pauvre 4. Une première conduite de soutirage de solution absorbante riche 5 est connectée en sortie en pied de la colonne d'absorption 2.

Cette première conduite de soutirage de solution absorbante riche 5 alimente en tête le régénérateur 8. Sur cette première conduite de soutirage de solution absorbante riche 5 est prévu un système de détente 6 afin de récupérer les hydrocarbures co-absorbés dans la colonne d'absorption 2.

Le régénérateur 8 est muni d'un moyen de chauffage 18 en pied (généralement appelé rebouilleur) et d'un système de reflux 9 en tête (muni d'un condenseur), de manière classique. En tête du régénérateur 8 est connectée, en sortie, une conduite de soutirage de gaz acides 10. En pied du régénérateur 8 est connectée, en sortie, une conduite de soutirage de solution absorbante pauvre 26, qui alimente un réservoir de solution absorbante pauvre 27. C'est en sortie du réservoir de solution absorbante pauvre 27 qu'est branchée la première conduite d'amenée de solution absorbante pauvre 4 qui alimente la colonne d'absorption 2.

Un échangeur de chaleur 7 permet un échange de chaleur entre la première conduite de soutirage de solution absorbante riche 5 et la conduite de soutirage de solution absorbante pauvre 26. Un échangeur de chaleur supplémentaire peut également être prévu pour contrôler la température de la solution absorbante pauvre.

Sur la conduite de soutirage de gaz acides 10 est prévu un système de compression 11. Le système de compression 11 peut comprendre un compresseur ou une succession de compresseurs ou d'étages de compresseur (par exemple deux dans le schéma représenté, ou éventuellement trois), un refroidisseur étant prévu à la sortie de chaque compresseur ou étage de compresseur. Lorsque le système de compression 11 comprend au moins deux compresseurs, on prévoit également un ballon de séparation entre les compresseurs successifs. La tête de chaque ballon de séparation alimente alors le compresseur suivant, tandis qu'une conduite de recyclage de condensats 13 est prévue au pied de chaque ballon de séparation et alimente en retour le système de reflux 9 du régénérateur 8.

Selon un mode de réalisation, en aval du système de compression 11, la conduite de soutirage de gaz acides 10 alimente un ballon de séparation 12. En tête du ballon de séparation 12 est branchée une conduite de soutirage de phase gazeuse 14 et une conduite de soutirage de phase liquide 15. Ces deux conduites alimentent une unité de distillation 16 à des niveaux différents, la conduite de soutirage de phase gazeuse 14 alimentant l'unité de distillation 16 au-dessus de la conduite de soutirage de phase liquide 15. Alternativement, il est possible de se dispenser du ballon de séparation 12, auquel cas la conduite de soutirage de gaz acides 10 alimente l'unité de distillation 16 à un seul niveau.

Selon un mode de réalisation (non représenté), on prévoit une unité de déshydratation sur la conduite de soutirage de gaz acides 10 en amont de l'unité de distillation 16. Il peut notamment s'agir d'un dispositif de tamis moléculaire(s) ou d'un dispositif de lavage par un solvant, tous deux connus dans le domaine.

Toutefois, selon un mode de réalisation préféré, il n'y a aucune unité de déshydratation spécifique disposée sur la conduite de soutirage de gaz acides 10 en amont de l'unité de distillation 16. Par unité de déshydratation spécifique on entend une unité dédiée à la déshydratation, notamment un dispositif de tamis moléculaire(s) ou un dispositif de lavage par un solvant. Il est toutefois entendu que la présence de la ou des conduites de recyclage de condensats 13 conduit nécessairement à une certaine déshydratation mais ne saurait être considérée comme la présence d'une unité de déshydratation spécifique.

L'unité de distillation 16 est de préférence sous la forme d'une colonne comprenant des dispositifs de contact liquide / vapeur tels que des plateaux ou un garnissage. Par rapport à l'état de la technique dans lequel les gaz CO₂ et H₂S sont séparés uniquement au moyen d'une unité de distillation, les paramètres de distillation sont moins exigeants selon la présente invention. Par conséquent, il est possible de réduire la consommation énergétique de l'unité de distillation (par rapport à l'état de la technique) et / ou de réduire le volume des équipements de l'unité de distillation 16 (en particulier, de réduire le nombre de plateaux et / ou le diamètre de la colonne).

De manière générale, le volume des équipements est adapté aux conditions d'opération visées. Selon un mode de réalisation, l'unité de distillation 16 comprend un nombre de plateaux compris entre 25 et 35 plateaux théoriques.

L'unité de distillation 16 est munie d'un moyen de chauffage 17 en pied (généralement appelé rebouilleur) et d'un système de reflux 19 en tête (muni d'un condenseur), de manière classique. En tête de l'unité de distillation 16 est connectée, en sortie, une première conduite de soutirage de flux riche en dioxyde de carbone 20. En pied de l'unité de distillation 16 est connectée, en sortie, une conduite de soutirage de flux riche en sulfure d'hydrogène 22.

La première conduite de soutirage de flux riche en dioxyde de carbone 20, après passage par un refroidisseur, alimente un contacteur 28. Le contacteur 28 est également alimenté par une deuxième conduite d'amenée de solution absorbante pauvre 23.

Le contacteur 28 peut être une colonne d'absorption du même type que la colonne d'absorption 2 décrite ci-dessus. Dans ce cas, la première conduite de soutirage de flux riche en dioxyde de carbone 20 alimente le contacteur 28 en pied et la deuxième conduite d'amenée de solution absorbante pauvre 23 alimente le contacteur 28 en tête. Le contacteur 28 assure alors un contact à contre-courant entre la phase liquide et la phase gazeuse.

Mais selon un mode de réalisation préféré, le contacteur 28 est plutôt un mélangeur à injection. Un mélangeur à injection est un mélangeur qui assure le mélange d'une phase liquide et d'une phase gazeuse en mode co-courant, typiquement en dispersant des gouttelettes de phase liquide dans la phase gazeuse.

Par exemple, le mélangeur à injection peut être un mélangeur turbulent, comprenant des moyens d'alimentation en phase liquide disposés en anneau à la périphérie d'une conduite de transport de phase gaz, et adapté pour disperser des gouttelettes de phase liquide dans la phase gazeuse par effet Venturi (ou effet tuyère), avant de séparer à nouveau immédiatement la phase liquide et la phase gaz.

Les documents WO 02/00334 et WO 2006/038810 fournissent des exemples de mélangeurs à injection appropriés dans le cadre de l'invention. La société Propure fabrique de tels mélangeurs à injection appropriés.

Le contacteur 28 peut également être un mélangeur statique, assurant le mélange de la phase liquide et de la phase gazeuse, ces deux phases étant ensuite séparées au moyen d'un ballon séparateur. La société Sulzer fabrique de tels mélangeurs statiques appropriés.

En sortie du contacteur 28 sont prévues une deuxième conduite de soutirage de flux riche en dioxyde de carbone 24 (en tête si le contacteur 28 est une colonne d'absorption) et une deuxième conduite de soutirage de solution absorbante riche 25 (en pied si le contacteur 28 est une colonne d'absorption).

Selon un mode de réalisation, l'installation comprend un seul circuit de solution absorbante, c'est-à-dire que la deuxième conduite d'amenée de solution absorbante pauvre 23 est issue du réservoir de solution absorbante pauvre 27 qui alimente également la colonne d'absorption 2 via la première conduite d'amenée de solution absorbante pauvre 4.

Dans ce cas, la deuxième conduite de soutirage de solution absorbante riche 25 alimente en retour le régénérateur 8 via le système de détente 6. Selon un mode de réalisation alternatif, cette deuxième conduite de soutirage de solution absorbante riche 25 alimente la colonne d'absorption 2 conjointement avec la première conduite d'amenée de solution absorbante pauvre 4 (ce qui correspond au cas où la solution absorbante dans la deuxième conduite de soutirage de solution absorbante riche 25 est semi-pauvre).

Il est bien entendu que l'installation selon l'invention est décrite ici selon son schéma directeur seulement, que des éléments supplémentaires nécessaires à son bon fonctionnement (échangeurs de chaleur, vannes, pompes, etc.) peuvent y être adjoints, et que des variations peuvent être prévues par rapport à ce schéma directeur sans en altérer la substance : présence de plusieurs colonnes d'absorption 2 et / ou de plusieurs régénérateurs 8, etc.

### Procédé de traitement de mélange gazeux comprenant des gaz acides

L'invention permet le traitement de mélanges gazeux, notamment du gaz naturel. La description qui suit est établie en relation avec le gaz naturel, mais un autre type de mélange gazeux contenant des gaz acides peut également être traité par le procédé de l'invention. Par exemple le procédé de l'invention permet de traiter des fumées, ou encore les gaz acides issus des procédés d'hydrodésulfuration de coupes pétrolières (telles que les essences ou gazoles) en raffinerie.

Le gaz naturel contient des gaz acides, en particulier du sulfure d'hydrogène et du dioxyde de carbone. Le gaz naturel peut également contenir du sulfure de carbonyle, des mercaptans et / ou du disulfure de carbone. Le procédé selon l'invention permet de diminuer considérablement la teneur du gaz naturel en sulfure d'hydrogène et en dioxyde de carbone, et éventuellement la teneur du gaz naturel en autres gaz acides.

De préférence, le rapport molaire de la teneur en dioxyde de carbone par rapport à la teneur en sulfure d'hydrogène dans le gaz naturel est inférieur ou égal à 1, de préférence inférieur ou égal à 0,75 et idéalement inférieur ou égal à 0,5. C'est en effet lorsque le dioxyde de carbone est minoritaire par rapport au sulfure d'hydrogène que l'invention est particulièrement avantageuse, par exemple en comparaison avec un système de séparation CO₂/H₂S par régénération étagée.

La première étape du procédé est une étape de désacidification du gaz naturel par mise en contact avec une solution absorbante, sous sa forme pauvre.

On parle de solution absorbante pauvre lorsque la solution absorbante est relativement peu chargée en gaz acides, et de solution absorbante riche lorsque la solution absorbante est relativement fortement chargée en gaz acides.

Sauf mention contraire, les concentrations énoncées dans la présente description sont données en pourcentages molaires.

Le gaz naturel, après l'étape de désacidification par mise en contact avec la solution absorbante, peut ultérieurement être déshydraté. Il est alors éventuellement disponible pour une distribution dans le réseau de gaz naturel. Par ailleurs, le gaz naturel après la désacidification et la déshydratation peut subir des traitements ultérieurs en vue de sa liquéfaction, ce qui permet d'obtenir du gaz naturel liquéfié.

La solution absorbante utilisée dans le cadre de l'invention peut être une solution d'absorption chimique, physique, ou physico-chimique. De préférence il s'agit d'une solution d'absorption chimique ou physico-chimique. Toutes les solutions absorbantes connues pour leur capacité à absorber les gaz acides mélangés aux hydrocarbures sont utilisables.

De préférence, la solution absorbante est une solution à base d'amine, notamment d'alcanolamine. A ce titre, l'alcanolamine peut notamment être choisie parmi le groupe constitué par la monoéthanolamine (MEA), le 2-aminoéthoxyéthanol également connu sous le nom de diglycolamine (DGA), la diisopropanolamine (DIPA), la diéthanolamine (DEA), la méthyldiéthanolamine (MDEA), la méthyldiéthanolamine activée (par exemple enrichie d'hydroxyéthylpipérazine ou de pipérazine), la triéthanolamine (TEA), les amines stériquement encombrées et leurs mélanges.

De préférence, l'alcanolamine est mélangée avec de l'eau et éventuellement avec un solvant physique.

Tout solvant physique connu convient à cette fin, et notamment le sulfolane. Ainsi, selon un mode de réalisation particulier, la solution absorbante comprend un mélange de DIPA, d'eau et de sulfolane, ou de MDEA, d'eau et de sulfolane.

Un autre type de solvant physique particulièrement avantageux est constitué par les thioalcanols en C₂-C₄, de formule R-S-C₂₋₄-OH où R est un groupement quelconque, par exemple un groupement alkyle ou un groupement alcool ou un groupement thiol ou un groupement alkylthioalcanol, le groupement contenant notamment jusqu'à 6 atomes de carbone. Le thiodiglycol (TDG) est un solvant physique particulièrement préféré. Il s'agit du composé de formule S(CH₂-CH₂-OH)₂. Outre le TDG, d'autres thioalcanols en C₂-C₄ peuvent être utilisés selon l'invention, notamment le méthylthioéthanol ou encore des molécules dimères et notamment l'éthylène-dithioéthanol, de formule (HO-CH₂-CH₂)-S-(CH₂-CH₂)-S-(CH₂-CH₂-OH). A cet égard on fait référence ici au document WO 2007/083012.

Selon un premier mode de réalisation préféré, la solution absorbante comprend :
- environ 20 à environ 60 % en masse de diéthanolamine ; et
- environ 40 à environ 80 % en masse d'eau.

Selon un deuxième mode de réalisation préféré, la solution absorbante comprend :
- environ 20 à environ 60 % en masse de méthyldiéthanolamine ; et
- environ 40 à environ 80 % en masse d'eau.

Selon un troisième mode de réalisation préféré, la solution absorbante comprend :
- environ 20 à environ 60 % en masse de méthyldiéthanolamine activée ; et
- environ 40 à environ 80 % en masse d'eau.

Selon un quatrième mode de réalisation particulièrement préféré, la solution absorbante comprend :
- environ 20 à environ 60 % en masse de diéthanolamine ;
- environ 20 à environ 60 % en masse d'eau ; et
- environ 10 à environ 40 % en masse de thiodiéthylène glycol ;
ou, de manière plus avantageuse :
- environ 30 à environ 45 % en masse de diéthanolamine ;
- environ 30 à environ 50 % en masse d'eau ; et
- environ 15 à environ 30 % en masse de thiodiéthylène glycol ;
ou, de manière encore plus avantageuse :
- environ 40 % en masse de diéthanolamine ;
- environ 40 % en masse d'eau ; et
- environ 20 % en masse de thiodiéthylène glycol.

Selon un cinquième mode de réalisation particulièrement préféré, la solution absorbante comprend :
- environ 20 à environ 60 % en masse de méthyldiéthanolamine ;
- environ 20 à environ 60 % en masse d'eau ; et
- environ 10 à environ 40 % en masse de thiodiéthylène glycol.

Selon un sixième mode de réalisation particulièrement préféré, la solution absorbante comprend :
- environ 20 à environ 60 % en masse de méthyldiéthanolamine activée ;
- environ 20 à environ 60 % en masse d'eau ; et
- environ 10 à environ 40 % en masse de thiodiéthylène glycol.

L'utilisation du co-solvant thioalcanol et plus particulièrement TDG est avantageuse car elle permet d'éliminer une part importante des mercaptans contenus dans le mélange gazeux à traiter, simultanément avec l'élimination du CO₂ et de l'H₂S.

Le gaz naturel à traiter, ascendant dans la colonne d'absorption 2, est mis en contact avec la solution absorbante (pauvre), descendante. La solution absorbante absorbe la majorité des gaz acides, et le gaz naturel traité est récupéré.

La température dans la colonne d'absorption 2 est typiquement comprise entre environ 20 et environ 100°C, de préférence entre environ 40 et environ 90°C. La pression dans la colonne est par exemple comprise entre 1 et 150 bar effectif, de préférence entre 40 et 100 bar effectif. L'opération s'effectue à un débit de mélange gazeux typiquement compris entre 0,2×10⁶ Nm³/jour et 20×106 Nm³/jour et à un débit de solution absorbante typiquement compris entre 5 et 1500 m³/heure.

Le gaz naturel ainsi traité (désacidifié) subit ensuite d'autres étapes de traitement ultérieur, par exemple une étape de déshydratation éventuellement suivie d'une étape de refroidissement et de liquéfaction pour produire du gaz naturel liquéfié.

La solution absorbante chargée en gaz acides ou solution absorbante riche, est par ailleurs régénérée dans le régénérateur 8, après une détente préliminaire.

Ladite détente préliminaire comprend optionnellement une détente flash de la solution absorbante au sein d'un ballon de détente flash. A l'issue de cette détente flash, la solution absorbante est à une température comprise entre 30°C et 90°C, et à une pression comprise entre 5 bar effectif et 30 bar effectif. Des gaz flashés sont récupérés par simple effet de la différence de pression. Ces gaz flashés peuvent être traités en aval, notamment pour récupérer une éventuelle fraction d'hydrocarbures contenus dans ces gaz flashés, en plus des gaz acides.

Puis la solution absorbante entre dans le régénérateur 8, qui fonctionne par exemple à une pression comprise entre 1 et 3 bar effectif. La température est de préférence la plus élevée possible tout en étant inférieure à la température de dégradation chimique et thermique de la solution absorbante. Par exemple cette température peut être comprise entre 110°C et 135°C, de préférence elle peut être d'environ 130°C.

Les valeurs de température et de pression qui précèdent valent pour des solutions absorbantes classiques, à base d'amine.

On récupère en sortie du régénérateur 8 d'une part un flux de gaz acides dans la conduite de soutirage de gaz acides 10 (contenant principalement du dioxyde de carbone et du sulfure d'hydrogène), d'autre part un flux de solution absorbante pauvre dans la conduite de soutirage de solution absorbante pauvre 26. La solution absorbante pauvre est recyclée (au moins en partie) vers l'étape de désacidification du gaz naturel.

Le flux de gaz acides est ensuite comprimé dans le système de compression 11, et envoyé vers l'unité de distillation 16 pour y subir une distillation séparant le CO₂ de l'H₂S. La compression des gaz acides peut être effectuée en une ou plusieurs étapes, de préférence plusieurs, notamment deux ou trois. Dans ce cas, après chaque étape de compression, le flux est refroidi et on sépare les condensats, qui sont retournés vers le régénérateur 8. Les condensats comprennent en premier lieu de l'eau. Par conséquent, la compression du flux de gaz acides en plusieurs étapes assure de facto une certaine déshydratation du flux de gaz acides.

Avant l'entrée dans l'unité de distillation 16, le flux de gaz acides est typiquement à une température comprise entre 10°C et 60°C, de préférence entre 25°C et 40°C, et à une pression comprise entre 10 et 50 bar effectif, de préférence entre 20 et 30 bar effectif. Dans ces conditions, ce flux de gaz acides comprend en général en réalité une phase gazeuse et une phase liquide. Il est optionnel et avantageux de séparer cette phase gazeuse et cette phase liquide préalablement à l'étape de distillation. En effet, la composition des deux phases est différente (la phase gazeuse étant plus riche en CO₂ que la phase liquide), et l'efficacité du procédé est donc optimisée lorsque chacune des deux phases est injectée dans l'unité de distillation 16 au niveau auquel la composition en CO₂ et H₂S est approximativement la même que celle de la phase en question.

La distillation assure une première séparation du CO₂ et de l'H₂S du flux de gaz acides. De préférence cette distillation est une distillation simple, qui ne fait pas intervenir de tiers corps. L'unité de distillation 16 est dimensionnée de telle sorte que, et les paramètres d'opération de la distillation sont fixés de telle sorte que :
- le flux riche en sulfure d'hydrogène, qui est récupéré en pied de l'unité de distillation 16, est très pur, c'est-à-dire présente une pureté supérieure à 99 %, c'est-à-dire que ce flux contient moins de 1 %, de préférence moins de 5000 ppmv, de manière plus particulièrement préférée moins de 2000 ppmv, idéalement moins de 200 ppmv, de dioxyde de carbone ; et
- le flux riche en dioxyde de carbone (appelé premier flux riche en dioxyde de carbone), qui est récupéré en tête de l'unité de distillation 16, est relativement pur, c'est-à-dire comprend entre 80 et 99 %, de préférence entre 85 et 98 %, de manière plus particulièrement préférée entre 90 et 97 %, et idéalement entre 93 et 96 %, de dioxyde de carbone.

En effet, l'unité de distillation 16 est dimensionnée de telle sorte que, et les paramètres d'opération de la distillation sont fixés de telle sorte que, la distillation n'est pas poussée à son maximum en ce qui concerne le premier flux de dioxyde de carbone, étant donné qu'une étape ultérieure de purification du premier flux de dioxyde de carbone est prévue.

Cela permet d'éviter d'avoir à mettre en oeuvre une distillation trop complexe, contraignante et / ou coûteuse.

En outre, la présence d'une quantité relativement importante de sulfure d'hydrogène dans l'ensemble de l'unité de distillation 16, y compris dans le système de reflux 19, permet de limiter considérablement les risques de formation d'hydrates dans l'unité de distillation 16. Par conséquent, selon un mode de réalisation préféré, il est inutile de prévoir une étape spécifique de déshydratation du flux de gaz acides avant la distillation (en particulier sur tamis moléculaires ou par lavage au solvant), la déshydratation nécessairement opérée lors de la compression des gaz acides s'avérant alors suffisante compte tenu des paramètres de la distillation.

Ce cas de figure est particulièrement avantageux par rapport aux distillations H₂S/CO₂ pratiquées dans l'état de la technique, pour lesquelles une déshydratation préalable poussée est souvent nécessaire, ce qui s'avère très contraignant.

En revanche, si la concentration en eau du flux de gaz acides comprimé est toutefois trop importante vis-à-vis des spécifications de l'unité de distillation 16, il est naturellement toujours possible de prévoir une telle étape préalable de déshydratation, par exemple sur tamis moléculaire(s) ou par lavage avec un solvant (typiquement du triéthylène glycol).

Le premier flux riche en dioxyde de carbone subit une étape ultérieure de purification par mise en contact avec un deuxième flux de solution absorbante pauvre, au sein du contacteur 28.

Le deuxième flux de solution absorbante pauvre doit être un flux de solution absorbante présentant une meilleure affinité pour le sulfure d'hydrogène que pour le dioxyde de carbone, ce qui est le cas notamment avec une solution absorbante à base de MDEA ou de MDEA activée, et dans une certaine mesure avec une solution à base de DEA, ou encore avec une solution absorbante à base de mélange DEA / TDG ou MDEA / TDG ou MDEA activée / TDG.

Il est particulièrement avantageux que la solution absorbante soit la même pour la désacidification du gaz naturel et pour la mise en contact avec le premier flux riche en dioxyde de carbone, car le procédé est alors particulièrement simplifié. Un seul circuit de solution absorbante peut en effet être alors prévu, et le même réservoir de solution absorbante pauvre 27 peut fournir le premier et le deuxième flux de solution absorbante pauvre, respectivement pour l'absorption des gaz acides et pour la purification du premier flux riche en dioxyde de carbone.

Le deuxième flux de solution absorbante riche, qui est issu de l'étape de purification du premier flux riche en dioxyde de carbone, peut être mélangé au premier flux de solution absorbante riche et subir la même étape de régénération. Alternativement, si la solution absorbante du deuxième flux de solution absorbante riche peut être considérée comme semi-pauvre, ce deuxième flux de solution absorbante riche peut être recyclé vers l'étape de désacidification du gaz naturel et absorber des gaz acides conjointement au premier flux de solution absorbante pauvre.

Il est particulièrement avantageux que le contacteur 28 soit un mélangeur à injection tel que défini ci-dessus. En effet, la mise en contact entre le premier flux riche en dioxyde de carbone et le deuxième flux de solution absorbante pauvre est dans ce cas efficace (la surface d'échange entre les deux flux étant très grande) mais aussi très rapide, c'est-à-dire que le temps de séjour (et de contact) des deux flux est court. Ainsi, on favorise d'autant plus l'absorption présentant la cinétique la plus rapide (c'est-à-dire l'absorption du sulfure d'hydrogène) par rapport à l'absorption présentant la cinétique la plus lente (c'est-à-dire l'absorption du dioxyde de carbone) ; on favorise donc la sélectivité de l'absorption du sulfure d'hydrogène par la solution absorbante.

A titre d'exemple on pourra opérer la mise en contact entre le premier flux riche en dioxyde de carbone et le deuxième flux de solution absorbante pauvre avec les paramètres suivants : pression comprise entre 5 et 30 bar effectif, et température comprise entre 20 et 60°C.

A l'issue de cette étape de purification du premier flux riche en dioxyde de carbone, on récupère donc le deuxième flux de solution absorbante riche (chargé principalement en sulfure d'hydrogène), ainsi qu'un deuxième flux riche en dioxyde de carbone, plus pur que le premier.

Le deuxième flux riche en dioxyde de carbone présente de préférence une pureté supérieure à 99 %, c'est-à-dire que ce flux contient moins de 1 %, de préférence moins de 5000 ppmv, de manière plus particulièrement préférée entre 10 ppmv et 1000 ppmv, idéalement moins de 200 ppmv, de sulfure d'hydrogène.

Le flux riche en sulfure d'hydrogène est par exemple dirigé vers une unité Claus de production de soufre, tandis que le deuxième flux riche en dioxyde de carbone est par exemple utilisé pour les besoins de l'amélioration de récupération d'huiles hydrocarbures (EOR), c'est-à-dire la réinjection sous pression en puits.

### EXEMPLES

Les exemples suivants illustrent l'invention sans la limiter.

### Exemple 1 (comparatif)

On considère dans cet exemple une installation et un procédé de traitement de gaz naturel conformément à l'état de la technique, en se concentrant sur l'aspect séparation sélective H₂S / CO₂ de l'installation et du procédé. On utilise une solution absorbante comprenant 53 % en poids d'eau et 47 % en poids de MDEA.

On sépare le dioxyde de carbone et le sulfure d'hydrogène dans des gaz acides uniquement par distillation. Les gaz acides comprennent 66 % d'H₂S, 33 % de CO₂, 0,3 % de CH₄, le solde étant constitué par des impuretés. Le gaz est saturé en eau dans ces conditions de pression et température.

En sortie du régénérateur, les gaz acides sont à une pression de 2 bar effectif et à une température de 40°C, avec une teneur en eau de 3.7 % mol. Le débit de gaz acides est de 290 kmol/h. Les gaz acides issus du régénérateur sont comprimés jusqu'à une pression de 28 bar effectif et envoyés dans une unité de distillation à une température de 31°C.

L'unité de distillation est prévue de sorte à produire en tête un flux contenant 99,9 % de CO₂ et 100 ppm de H₂S, et en pied un flux contenant 200 ppmv de CO₂ et 99.9% de H₂S.

La colonne de distillation comporte 30 plateaux théoriques et est opérée à une pression de tête de 27 bar effectif. La température du condenseur est de -9°C.

Compte tenu de ces spécifications, il est préférable de prévoir une étape de déshydratation spécifique des gaz acides avant l'étape de distillation pour éviter la formation d'hydrates dans l'unité de distillation.

Selon des simulations numériques, la consommation des principaux postes de dépense énergétique s'établit comme suit :
- Puissance du système de compression des gaz acides en amont de la distillation : 831 kW.
- Puissance du système de condensation en tête de l'unité de distillation : 916 kW.
- Puissance du système de chauffage en pied de l'unité de distillation : 1,64 MW.
- Puissance de chauffage pour l'unité de déshydratation : 0,1 MW.
- Puissance mécanique totale dépensée : 1747 kW.
- Puissance thermique totale dépensée : 1,74 MW.
- Puissance mécanique totale dépensée convertie en équivalent « fuel gas » : 17809 Sm3/j.
- Puissance thermique totale dépensée convertie en équivalent « fuel gas » : 4928 Sm3/j.
- Puissance totale dépensée convertie en équivalent « fuel gas » : 22737 Sm3/j.

### Exemple 2

Cet exemple est identique à l'exemple 1 aux différences près suivantes.

L'unité de distillation est prévue de sorte à produire en tête un flux contenant 95,3 % de CO₂ et 4,7 % de H₂S, et en pied un flux contenant 200 ppm mol de CO₂ et 99.9 % de H₂S.

La colonne de distillation comporte 30 plateaux théoriques et est opérée à une pression de tête de 27 bar effectif. La température du condenseur est de -9°C.

Compte tenu des spécifications de l'unité de distillation, il est inutile de prévoir une étape de déshydratation spécifique des gaz acides avant l'étape de distillation pour éviter la formation d'hydrates dans l'unité de distillation.

Après l'étape de distillation, le flux de tête riche en CO₂ subit une étape supplémentaire de purification, par mise en contact avec la même solution absorbante qui est utilisée pour désacidifier le gaz naturel. Cette mise en contact est effectuée au sein d'une colonne d'absorption. Cette purification est réglée de telle sorte que l'on récupère un flux CO₂ final contenant 99,9 % de CO₂ et 100 ppm de H₂S, tout comme dans l'exemple 1.

La colonne d'absorption permettant le contact avec un débit de solvant de 18 Sm3/h comporte 12 plateaux effectifs.

Selon des simulations numériques, la consommation des principaux postes de dépense énergétique s'établit comme suit :
- Puissance du système de compression des gaz acides en amont de la distillation : 887 kW.
- Puissance du système de condensation en tête de l'unité de distillation : 715 kW.
- Puissance du système de chauffage en pied de l'unité de distillation : 1,07 MW.
- Puissance supplémentaire de pompage de solution absorbante : 10 kW.
- Puissance supplémentaire de chauffage lors de la régénération de la solution absorbante : 1 MW.
- Puissance supplémentaire de condensation lors de la régénération de la solution absorbante (reflux) : 5 kW.
- Puissance mécanique totale dépensée : 1617 kW.
- Puissance thermique totale dépensée : 2,07 MW.
- Puissance mécanique totale dépensée convertie en équivalent « fuel gas » : 16484 Sm3/j.
- Puissance thermique totale dépensée convertie en équivalent « fuel gas » : 5862 Sm3/j.
- Puissance totale dépensée convertie en équivalent « fuel gas » : 22346 Sm3/j.

On constate donc que l'exemple 2 (selon l'invention) permet de simplifier l'installation et le procédé par rapport à l'état de la technique (exemple 1), en se dispensant d'une éventuelle déshydratation des gaz acides préalable à la distillation. Ainsi, on évite de prévoir un dispositif de tamis moléculaires, particulièrement lourd et complexe à mettre en oeuvre (notamment du fait de la nécessité de traiter le gaz de régénération). En outre, les débits gaz et liquides à l'intérieur de la colonne sont plus faibles que ceux de l'exemple 1, diminution qui autorise une réduction du diamètre de la colonne et des dimensions des équipements associés. On obtient enfin un gain énergétique global de 1,7% en fonctionnement.

### Exemple 3

Cet exemple est identique à l'exemple 2 à la seule différence près que la purification du flux riche en CO₂ est effectuée dans un mélangeur à injection, qui permet une absorption plus sélective de l'H₂S, par rapport à la colonne d'absorption utilisée dans l'exemple 2.

Le mélangeur à injection est un mélangeur disponible dans le commerce sous le nom ProCAP®.

Selon des simulations numériques, la consommation des principaux postes de dépense énergétique s'établit comme suit :
- Puissance du système de compression des gaz acides en amont de la distillation : 850 kW.
- Puissance du système de condensation en tête de l'unité de distillation : 702 kW.
- Puissance du système de chauffage en pied de l'unité de distillation : 1,05 MW.
- Puissance supplémentaire de pompage de solution absorbante : 10 kW.
- Puissance supplémentaire de chauffage lors de la régénération de la solution absorbante : 0,5 MW.
- Puissance supplémentaire de condensation lors de la régénération de la solution absorbante (reflux) : 5 kW.
- Puissance mécanique totale dépensée : 1567 kW.
- Puissance thermique totale dépensée : 1,55 MW.
- Puissance mécanique totale dépensée convertie en équivalent « fuel gas » : 15974 Sm3/j.
- Puissance thermique totale dépensée convertie en équivalent « fuel gas » : 4930 Sm3/j.
- Puissance totale dépensée convertie en équivalent « fuel gas » : 20364 Sm3/j.

On constate donc que l'exemple 3 (selon l'invention) permet de simplifier l'installation et le procédé par rapport à l'état de la technique (exemple 1) en se dispensant d'une éventuelle déshydratation des gaz acides préalable à la distillation. En outre, les débits gaz et liquides à l'intérieur de la colonne sont aussi plus faibles que ceux de l'exemple 1, diminution qui autorise aussi une réduction du diamètre de la colonne et des dimensions des équipements associés. Enfin, ce mode de réalisation permet également d'obtenir un gain énergétique de 10,4 % en fonctionnement.

## Revendications

1. Procédé de traitement d'un mélange gazeux contenant du dioxyde de carbone et du sulfure d'hydrogène, comprenant les étapes suivantes :
- désacidification du mélange gazeux par mise en contact dudit mélange gazeux avec un premier flux de solution absorbante pauvre, fournissant un mélange gazeux désacidifié et un premier flux de solution absorbante riche ;
- régénération du premier flux de solution absorbante riche, fournissant le premier flux de solution absorbante pauvre et un flux de gaz acides ;
- distillation du flux de gaz acides, fournissant un premier flux riche en dioxyde de carbone, présentant une concentration molaire de dioxyde de carbone comprise entre 80 et 99%, et un flux riche en sulfure d'hydrogène, présentant une pureté supérieure à 99% ;
- purification du premier flux riche en dioxyde de carbone par mise en contact dudit premier flux riche en dioxyde de carbone avec un deuxième flux de solution absorbante pauvre, fournissant un deuxième flux riche en dioxyde de carbone et un deuxième flux de solution absorbante riche, la concentration molaire de dioxyde de carbone dans le deuxième flux riche en dioxyde de carbone étant supérieure à la concentration molaire de dioxyde de carbone dans le premier flux riche en dioxyde de carbone.

2. Procédé selon la revendication 1, dans lequel le premier flux de solution absorbante pauvre et le deuxième flux de solution absorbante pauvre ont la même composition.

3. Procédé selon la revendication 2, dans lequel :
- l'étape de régénération comprend également la régénération du deuxième flux de solution absorbante riche, ladite étape de régénération fournissant le premier flux de solution absorbante pauvre et le deuxième flux de solution absorbante pauvre ; ou
- l'étape de désacidification comprend également la mise en contact du mélange gazeux avec le deuxième flux de solution absorbante riche, fournissant le mélange gazeux désacidifié et le premier flux de solution absorbante riche.

4. Procédé selon l'une des revendications 1 à 3, dans lequel le mélange gazeux contenant du dioxyde de carbone et du sulfure d'hydrogène est à base d'hydrocarbures, et de préférence est du gaz naturel.

5. Procédé selon l'une des revendications 1 à 4, dans lequel le rapport de concentration molaire entre le dioxyde de carbone et le sulfure d'hydrogène dans le mélange gazeux comprenant du dioxyde de carbone et du sulfure d'hydrogène est inférieur ou égal à 1, de préférence inférieur ou égal à 0,75 et idéalement inférieur ou égal à 0,5.

6. Procédé selon l'une des revendications 1 à 5, dans lequel la concentration molaire de dioxyde de carbone dans le premier flux riche en dioxyde de carbone est comprise entre 85 et 98 %, de manière préférée entre 90 et 97 %, et de manière plus particulièrement préférée entre 93 et 96 %.

7. Procédé selon l'une des revendications 1 à 6, dans lequel :
- la concentration de dioxyde de carbone dans le flux riche en sulfure d'hydrogène est inférieure ou égale à 5000 ppmv, de préférence inférieure ou égale à 2000 ppmv, de manière plus particulièrement préférée inférieure ou égale à 200 ppmv ; et / ou
- la concentration de sulfure d'hydrogène dans le deuxième flux riche en dioxyde de carbone est inférieure ou égale à 5000 ppmv, de préférence inférieure ou égale à 1000 ppmv, de manière plus particulièrement préférée inférieure ou égale à 200 ppmv.

8. Procédé selon l'une des revendications 1 à 7, comprenant en outre l'étape de :
- déshydratation du mélange gazeux désacidifié.

9. Procédé selon l'une des revendications 1 à 8, ne comprenant pas d'étape de déshydratation du flux de gaz acides au moyen de tamis moléculaire ou d'une mise en contact avec un solvant, préalablement à l'étape de distillation.

10. Installation de traitement d'un mélange gazeux contenant des gaz acides, comprenant :
- une conduite d'amenée de mélange gazeux (1);
- une première conduite d'amenée de solution absorbante pauvre (4) ;
- une colonne d'absorption (2), alimentée par la conduite d'amenée de mélange gazeux (1) et par la première conduite d'amenée de solution absorbante pauvre (4) ;
- une conduite de soutirage de mélange gazeux désacidifié (3) issue de la colonne d'absorption (2) ;
- une première conduite de soutirage de solution absorbante riche (5) issue de la colonne d'absorption (2) ;
- un régénérateur (8), alimenté par la première conduite de soutirage de solution absorbante riche (5);
- une conduite de soutirage de solution absorbante pauvre (26) issue du régénérateur (8) ;
- une conduite de soutirage de gaz acides (10) issue du régénérateur (8) ;
- une unité de distillation (16), alimentée par la conduite de soutirage de gaz acides (10) ;
- une conduite de soutirage de flux riche en sulfure d'hydrogène (22) issue de l'unité de distillation (16) ;
- une première conduite de soutirage de flux riche en dioxyde de carbone (20) issue de l'unité de distillation (16);
- une deuxième conduite d'amenée de solution absorbante pauvre (23) ;
- un contacteur (28) alimenté par la première conduite de soutirage de flux riche en dioxyde de carbone (20) et par la deuxième conduite d'amenée de solution absorbante pauvre (23) ;
- une deuxième conduite de soutirage de flux riche en dioxyde de carbone (24) issue du contacteur (28) ; et
- une deuxième conduite de soutirage de solution absorbante riche (25) issue du contacteur (28).

11. Installation selon la revendication 10, dans laquelle la première conduite d'amenée de solution absorbante pauvre (4) et la deuxième conduite d'amenée de solution absorbante pauvre (23) sont issues d'un même réservoir de solution absorbante pauvre (27).

12. Installation selon la revendication 11, dans laquelle :
- la deuxième conduite de soutirage de solution absorbante riche (25) alimente le régénérateur (8) ; ou
- la deuxième conduite de soutirage de solution absorbante riche (25) alimente la colonne d'absorption (2).

13. Installation selon l'une des revendications 10 à 12, dans laquelle le contacteur (28) est une colonne d'absorption ou, de préférence, un mélangeur à injection ou un mélangeur statique.

14. Installation selon l'une des revendications 10 à 13, qui est dépourvue d'unité de déshydratation par solvant ou par tamis moléculaire entre le régénérateur (8) et l'unité de distillation (16).

15. Procédé selon l'une des revendications 1 à 9, mis en oeuvre dans une installation selon l'une des revendications 10 à 14.

16. Procédé de production de gaz naturel liquéfié, comprenant :
- le traitement d'un gaz naturel contenant des gaz acides, selon le procédé de l'une des revendications 1 à 9 ; et
- la liquéfaction du gaz naturel traité.

## Patentansprüche

1. Verfahren zur Behandlung einer Gasmischung, die Kohlendioxid und Schwefelwasserstoff enthält, wobei es folgende Schritte umfasst:
- Entsäuerung der Gasmischung, indem die Gasmischung mit einem ersten Stoffstrom einer abgereicherten absorbierenden Lösung in Kontakt gebracht wird, wobei eine entsäuerte Gasmischung und ein erster Stoffstrom einer angereicherten absorbierenden Lösung erhalten wird;
- Regenerierung des ersten Stoffstroms einer angereicherten absorbierenden Lösung, wobei der erste Stoffstrom einer abgereicherten absorbierenden Lösung und ein Stoffstrom saurer Gase erhalten werden;
- Destillation des Stoffstroms saurer Gase, wobei ein erster kohlendioxidreicher Stoffstrom, der eine molare Konzentration an Kohlendioxid im Bereich von 80 bis 99 % aufweist, und ein schwefelwasserstoffreicher Stoffstrom, der einen Reinheitsgrad von mehr als 99 % aufweist, erhalten werden;
- Aufreinigung des ersten kohlendioxidreichen Stoffstroms, indem der erste kohlendioxidreiche Stoffstrom mit einem zweiten Stoffstrom einer abgereicherten absorbierenden Lösung in Kontakt gebracht wird, wobei ein zweiter kohlendioxidreicher Stoffstrom und ein zweiter Stoffstrom einer angereicherten absorbierenden Lösung erhalten werden, wobei die molare Konzentration an Kohlendioxid im zweiten kohlendioxidreichen Stoffstrom größer als die molare Konzentration an Kohlendioxid im ersten kohlendioxidreichen Stoffstrom ist.

2. Verfahren nach Anspruch 1, wobei der erste Stoffstrom einer abgereicherten absorbierenden Lösung und der zweite Stoffstrom einer abgereicherten absorbierenden Lösung dieselbe Zusammensetzung haben.

3. Verfahren nach dem Anspruch 2, wobei:
- der Regenerierschritt weiterhin die Regenerierung des zweiten Stoffstroms einer angereicherten absorbierenden Lösung umfasst, wobei beim Regenerierschritt der erste Stoffstrom einer abgereicherten absorbierenden Lösung und der zweite Stoffstrom einer abgereicherten absorbierenden Lösung erhalten werden; oder
- der Entsäuerungsschritt weiterhin das Inkontaktbringen der Gasmischung mit dem zweiten Stoffstrom einer angereicherten absorbierenden Lösung umfasst, wobei eine entsäuerte Gasmischung und der erste Stoffstrom einer angereicherten absorbierenden Lösung erhalten werden.

4. Verfahren nach einem der Ansprüche 1 bis 3, wobei die Gasmischung, welche Kohlendioxid und Schwefelwasserstoff enthält, auf Kohlenwasserstoffen basiert, wobei es sich vorzugsweise um Erdgas handelt.

5. Verfahren nach einem der Ansprüche 1 bis 4, wobei das molare Konzentrationsverhältnis zwischen dem Kohlendioxid und dem Schwefelwasserstoff in der Gasmischung, welche Kohlendioxid und Schwefelwasserstoff umfasst, kleiner als oder gleich 1 ist, vorzugsweise kleiner oder gleich 0,75 und idealerweise kleiner oder gleich 0,5.

6. Verfahren nach einem der Ansprüche 1 bis 5, wobei die molare Konzentration an Kohlendioxid in dem ersten kohlendioxidreichen Stoffstrom im Bereich von 85 bis 98 %, vorzugsweise zwischen 90 und 97 %, und auf besonders bevorzugte Weise zwischen 93 und 96 % liegt.

7. Verfahren nach einem der Ansprüche 1 bis 6, wobei:
- die Konzentration an Kohlendioxid in dem schwefelwasserstoffreichen Stoffstrom kleiner oder gleich 5000 ppmv ist, vorzugsweise kleiner oder gleich 2000 ppmv, und auf besonders bevorzugte Weise kleiner oder gleich 200 ppmv; und/oder
- die Konzentration an Schwefelwasserstoff in dem kohlendioxidreichen Stoffstrom kleiner oder gleich 5000 ppmv ist, vorzugsweise kleiner oder gleich 1000 ppmv, und auf besonders bevorzugte Weise kleiner oder gleich 200 ppmv.

8. Verfahren nach einem der Ansprüche 1 bis 7, darüber hinaus den folgenden Schritt umfassend:
- Entfeuchtung der entsäuerten Gasmischung.

9. Verfahren nach einem der Ansprüche 1 bis 8, welches vor dem Destillationsschritt keinerlei Schritt der Entfeuchtung des Stoffstroms saurer Gase mittels eines Molekularsiebs oder durch Inkontaktbringen mit einem Lösemittel umfasst.

10. Anlage zur Behandlung einer Gasmischung, die saure Gase enthält, umfassend:
- eine Leitung zum Zuführen der Gasmischung (1);
- eine erste Leitung zum Zuführen der abgereicherten absorbierenden Lösung (4);
- eine Absorptionskolonne (2), die von der Leitung zum Zuführen der Gasmischung (1) und von der ersten Leitung zum Zuführen der abgereicherten absorbierenden Lösung (4) gespeist wird;
- eine Leitung (3), die der Entnahme der entsäuerten Gasmischung dient und an der Absorptionskolonne (2) ihren Ursprung nimmt;
- eine erste Leitung (5), die der Entnahme der angereicherten absorbierenden Lösung dient und an der Absorptionskolonne (2) ihren Ursprung nimmt;
- eine Regeneriervorrichtung (8), die von der ersten Leitung zur Entnahme der angereicherten absorbierenden Lösung (5) gespeist wird;
- eine Leitung (26), die der Entnahme der abgereicherten absorbierenden Lösung dient und ihren Ursprung am Regenerator (8) nimmt;
- eine Leitung (10), die der Entnahme der sauren Gase dient und ihren Ursprung am Regenerator (8) nimmt;
- eine Destillationseinheit (16), die von der Leitung zur Entnahme der sauren Gase (10) gespeist wird;
- eine Leitung (22), die der Entnahme des schwefelwasserstoffreichen Stoffstroms dient und ihren Ursprung an der Destillationseinheit (16) nimmt;
- eine erste Leitung (20), die der Entnahme des kohlendioxidreichen Stoffstroms dient und ihren Ursprung an der Destillationseinheit (16) nimmt;
- eine zweite Leitung zum Zuführen der abgereicherten absorbierenden Lösung (23);
- eine Kontaktvorrichtung (28), die von der ersten Leitung zur Entnahme des kohlendioxidreichen Stoffstroms (20) und von der zweiten Leitung zum Zuführen der abgereicherten absorbierenden Lösung (23) gespeist wird;
- eine zweite Leitung (24), die der Entnahme des kohlendioxidreichen Stoffstroms dient und ihren Ursprung an der Kontaktvorrichtung (28) nimmt; und
- eine zweite Leitung (25), die der Entnahme der angereicherten absorbierenden Lösung dient und ihren Ursprung an der Kontaktvorrichtung (28) nimmt.

11. Anlage nach Anspruch 10, wobei die erste Leitung zum Zuführen der abgereicherten absorbierenden Lösung (4) und die zweite Leitung zum Zuführen der abgereicherten absorbierenden Lösung (23) ihren Ursprung an ein und demselben Vorratsbehälter (27) mit abgereicherter absorbierender Lösung nehmen.

12. Anlage nach Anspruch 11, wobei:
- die zweite Leitung zur Entnahme der angereicherten absorbierenden Lösung (25) die Regeneriervorrichtung (8) speist; oder
- die zweite Leitung zur Entnahme der angereicherten absorbierenden Lösung (25) die Absorptionskolonne (2) speist.

13. Anlage nach einem der Ansprüche 10 bis 12, wobei es sich bei der Kontaktvorrichtung (28) um eine Absorptionskolonne oder, vorzugsweise, eine Mischvorrichtung mit Einspritzung oder eine statische Mischvorrichtung handelt.

14. Anlage nach einem der Ansprüche 10 bis 13, die zwischen der Regeneriervorrichtung (8) und der Destillationseinheit (16) über keinerlei Einheit zur Entfeuchtung durch ein Lösemittel oder durch ein Molekularsieb verfügt.

15. Verfahren nach einem der Ansprüche 1 bis 9, das in einer Anlage nach einem der Ansprüche 10 bis 14 durchgeführt wird.

16. Verfahren zur Herstellung von Flüssigerdgas, umfassend:
- die Behandlung eines Erdgases, das saure Gase enthält, gemäß dem Verfahren nach einem der Ansprüche 1 bis 9; und
- die Verflüssigung des behandelten Erdgases.

## Claims

1. A method for treating a gas mixture containing carbon dioxide and hydrogen sulfide, comprising the following steps:
- deacidification of the gas mixture by contacting said gas mixture with a first lean absorbent solution stream, providing a deacidified gas mixture and a first rich absorbent solution stream;
- regeneration of the first rich absorbent solution, providing the first lean absorbent solution stream and a stream of sour gases;
- distillation of the stream of sour gases, providing a first carbon-dioxide-rich stream, having a molar concentration of carbon dioxide comprised between 70 and 99%, and a hydrogen-sulfide-rich stream, having a purity higher than 99%;
- purification of the first carbon-dioxide-rich stream by contacting said first carbon-dioxide-rich stream with a second lean absorbent solution stream, providing a second carbon-dioxide-rich stream and a second rich absorbent solution stream, the molar concentration of carbon dioxide in the second carbon-dioxide-rich stream being greater than the molar concentration of carbon dioxide in the first carbon-dioxide-rich stream.

2. The method according to claim 1, wherein the first lean absorbent solution stream and the second lean absorbent solution stream have the same composition.

3. The method according to claim 2, wherein:
- the regeneration step also comprises the regeneration of the second rich absorbent solution stream, said regeneration step providing the first lean absorbent solution stream and the second lean absorbent solution stream; or
- the deacidification step also comprises contacting the gas mixture with the second rich absorbent solution stream, providing the deacidified gas mixture and the first rich absorbent solution stream.

4. The method according to one of claims 1 to 3, wherein the gas mixture containing carbon dioxide and hydrogen sulfide is based on hydrocarbons, and preferably is natural gas.

5. The method according to one of claims 1 to 4, wherein the molar concentration ratio between carbon dioxide and hydrogen sulfide in the gas mixture comprising carbon dioxide and hydrogen sulfide is less than or equal to 1, preferably less than or equal to 0.75 and ideally less than or equal to 0.5.

6. The method according to one of claims 1 to 5, wherein the molar concentration of carbon dioxide in the first carbon-dioxide-rich stream is comprised between 85 and 98%, preferably between 90 and 97%, and most preferably between 93 and 96%.

7. The method according to one of claims 1 to 6, wherein:
- the carbon dioxide concentration in the hydrogen-sulfide-rich stream is less than or equal to 5,000 ppmv, preferably less than or equal to 2,000 ppmv, most preferably less than or equal to 200 ppmv; and/or
- the hydrogen sulfide concentration in the second carbon-dioxide-rich stream is less than or equal to 5,000 ppmv, preferably less than or equal to 1,000 ppmv, most preferably less than or equal to 200 ppmv.

8. The method according to one of claims 1 to 7, further comprising the step:
- dehydration of the deacidified gas mixture.

9. The method according to one of claims 1 to 8, not comprising any step for dehydrating the stream of sour gases by means of a molecular sieve or by contact with a solvent, prior to the distillation step.

10. An installation for treating a gas mixture containing sour gases, comprising:
- a conduit for supplying a gas mixture (1);
- a first conduit for supplying a lean absorbent solution (4);
- an absorption column (2), fed by the gas mixture supply conduit (1) and by the first conduit for supplying a lean absorbent solution (4);
- a conduit for drawing off a deacidified gas mixture (3) originating from the absorption column (2);
- a first conduit for drawing off a rich absorbent solution (5) originating from the absorption column (2);
- a regenerator (8), fed by the first conduit for drawing off a rich absorbent solution (5);
- a conduit for drawing off a lean absorbent solution (26) originating from the regenerator (8);
- a conduit for drawing off sour gases (10) originating from the regenerator (8);
- a distillation unit (16), fed by the conduit for drawing off sour gases (10);
- a conduit for drawing off a hydrogen-sulfide-rich stream (22) originating from the distillation unit (16);
- a first conduit for drawing off a carbon-dioxide-rich stream (20) originating from the distillation unit (16);
- a second conduit for supplying a lean absorbent solution (23);
- a contactor (28) fed by the first conduit for drawing off a carbon-dioxide-rich stream (20) and by the second conduit for supplying a lean absorbent solution (23);
- a second conduit for drawing off a carbon-dioxide-rich stream (24) originating from the contactor (28); and
- a second conduit for drawing off a rich absorbent solution (25) originating from the contactor (28).

11. The installation according to claim 10, wherein the first conduit for supplying a lean absorbent solution (4) and the second conduit for supplying a lean absorbent solution (23) originate from a same tank of lean absorbent solution (27).

12. The installation according to claim 11, wherein:
- the second conduit for drawing off a rich absorbent solution (25) feeds the regenerator (8); or
- the second conduit for drawing off a rich absorbent solution (25) feeds the absorption column (2).

13. The installation according to one of claims 10 to 12, wherein the contactor (28) is an absorption column or, preferably, an injection mixer or a static mixer.

14. The installation according to one of claims 10 to 13, which is devoided of any unit for dehydration by a solvent or by a molecular sieve between the regenerator (8) and the distillation unit (16).

15. The method according to one of claims 1 to 9, implemented in an installation according to one of claims 10 to 14.

16. A method for producing liquefied natural gas, comprising:
- the treatment of natural gas containing sour gases, according to the method of one of claims 1 to 9; and
- the liquefaction of the treated natural gas.
